# EUROPEAN PATENT APPLICATION

(11) **EP 4 621 953 A1**
(43) Date of publication of application: **24.09.2025**
(21) Application number: 24214633.0
(22) Date of filing: 21.11.2024
(51) Int. Cl.: H01M 50/209, H01M 50/213, H01M 50/367, H01M 50/204

(54) **BATTERY PACK**

(30) Priority: 19.03.2024 KR 20240037766
(71) Applicant: SAMSUNG SDI CO., LTD., Yongin-si, Gyeonggi-do 17084 (KR)
(72) Inventor: HWANG, Ho Ryong, 16678 Suwon-si (KR)
(74) Representative: Marks & Clerk LLP

(57) **Abstract**

A battery pack includes a housing, a plurality of battery cells in the housing and each comprising a vent hole, a first holder in the housing and configured to support the battery cells, and a guide between the housing and the first holder and configured to guide a flow of an emission discharged from the vent hole.

## Description

### BACKGROUND

### 1. Field

Aspects of embodiments of the present disclosure relate to a battery pack.

### 2. Discussion of Related Art

Unlike a primary battery that cannot be recharged, a secondary battery is a battery that can be recharged and discharged. A low-capacity secondary battery may be used for portable small-sized electronic devices, such as smartphones, feature phones, notebook computers, digital cameras, and camcorders, and a high-capacity secondary battery may be widely used as a power source for driving a motor and a power storage battery in hybrid vehicles or electric vehicles. The secondary battery includes an electrode assembly including a positive electrode and a negative electrode, a case accommodating the electrode assembly, an electrode terminal connected to the electrode assembly, and the like.

The secondary battery may be used as a battery pack formed of a plurality of unit battery cells connected in series and/or parallel to provide high energy density. The battery pack may be formed by connecting electrode terminals of a plurality of unit batteries to each other to meet a required amount of power and to implement a high-power secondary battery of, for example, an electric vehicle.

The above-described information disclosed in the technology that forms the background of the present disclosure is provided to improve understanding of the background of the present disclosure, and thus may include information that does not constitute the related art.

### SUMMARY

According to an aspect of one or more embodiments of the present disclosure, a battery pack capable of preventing (preventing or substantially preventing) chain ignition of battery cells is provided.

The above and other aspects and features of the present disclosure will be described in or will be apparent from the following description of some embodiments of the present disclosure.

According to one or more embodiments of the present disclosure, a battery pack includes a housing, a plurality of battery cells in the housing and each comprising a vent hole, a first holder in the housing and configured to support the battery cells; and a guide between the housing and the first holder and configured to guide a flow of an emission discharged from the vent hole.

The first holder may include a first holder body seated on the battery cells, a transfer hole passing through the first holder body and facing the vent hole, a first alignment member extending from the first holder body and inserted between the adjacent battery cells, and a fixing member extending from the first holder body and fixed to the housing.

The fixing member may be on an end portion of the first holder body.

The fixing member may include a first fixing member connected to the first holder body and extending in a first direction, and a second fixing member extending from the first fixing member in a direction intersecting the first direction and passing through the housing.

The first direction may be parallel to a longitudinal direction of a battery cell of the plurality of battery cells.

An end portion of the second fixing member may be exposed to an outside of the housing.

A length of the second fixing member may be less than a length of the first fixing member.

The guide may include a first channel connected to the transfer hole and located between the housing and the first holder body, a second channel connected to the first channel and located between the housing and the first fixing member, and a third channel connected to the second channel and located between the housing and the second fixing member.

The second channel may intersect the first channel.

An end portion of the third channel may be connected to an external space of the housing.

The battery pack may further include a housing vent in the housing and configured to rupture in response to an increase in pressure or temperature of the guide.

A thickness of the housing vent may be less than a thickness of the housing.

A ratio of the thickness of the housing vent to the thickness of the housing may be greater than or equal to 0.3 and less than or equal to 0.5.

The housing vent may face the second fixing member with the third channel therebetween.

The battery pack may further include a blocking member on a battery cell of the plurality of battery cells and configured to close the vent hole.

The blocking member may be separated from the battery cell as the emission is discharged from the vent hole.

An area of the blocking member may be less than an area of the transfer hole.

The battery pack may further include a second holder spaced apart from the first holder and configured to support the battery cells.

At least some of the above and other features of the invention are set out in the claims.

### BRIEF DESCRIPTION OF THE DRAWINGS

The drawings attached to this specification illustrate some embodiments of the present disclosure, and further describe aspects and features of the present disclosure together with the detailed description of the present disclosure. However, the present disclosure is not to be construed as being limited to the drawings.
FIG. 1 is an exploded perspective view schematically illustrating a configuration of a battery pack according to an embodiment of the present disclosure;
FIG. 2 is a partial cross-sectional view schematically illustrating a configuration of the battery pack of FIG. 1;
FIG. 3 is a perspective view schematically illustrating a configuration of a battery cell according to an embodiment of the present disclosure;
FIG. 4 is a cross-sectional view schematically illustrating a configuration of the battery cell of FIG. 3;
FIG. 5 is an enlarged view schematically illustrating a configuration of a third channel of the battery pack of FIG. 1;
FIG. 6 is a partial cross-sectional view schematically illustrating an operation state of the battery pack of FIG. 1 in an event of a thermal runaway or ignition of a battery cell;
FIG. 7 is a partial cross-sectional view schematically illustrating a configuration of a battery pack according to another embodiment of the present disclosure;
FIG. 8 is an enlarged view schematically illustrating a configuration of a housing vent of the battery pack of FIG. 7;
FIGS. 9 and 10 are partial cross-sectional views schematically illustrating an operation of the battery pack of FIG. 7 in an event of a thermal runaway or ignition of a battery cell.
FIG. 11 is a partial cross-sectional view schematically illustrating a configuration of a battery pack according to another embodiment of the present disclosure;
FIG. 12 is a plan view schematically illustrating a configuration of a blocking member of the battery pack of FIG. 11; and
FIG. 13 is a partial cross-sectional view schematically illustrating an operation state of the battery pack of FIG. 11 in an event of a thermal runaway or ignition of a battery cell.

### DETAILED DESCRIPTION

Herein, some embodiments of the present disclosure will be described, in further detail, with reference to the accompanying drawings. The terms or words used in this specification and claims are not to be construed as being limited to the usual or dictionary meaning and are to be interpreted as having meaning and concept consistent with the technical idea of the present disclosure based on the principle that the inventor can be his/her own lexicographer to appropriately define the concept of the term.

The embodiments described in this specification and the configurations shown in the drawings are provided as some example embodiments of the present disclosure and do not necessarily represent all of the technical ideas, aspects, and features of the present disclosure. Accordingly, it is to be understood that there may be various equivalents and modifications that may replace or modify the embodiments described herein at the time of filing this application.

It is to be understood that when an element or layer is referred to as being "on," "connected to," or "coupled to" another element or layer, it may be directly on, connected, or coupled to the other element or layer, or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element, or the first element may be indirectly coupled or connected to the second element via one or more intervening elements.

In the figures, dimensions of the various elements, layers, etc. may be exaggerated for clarity of illustration. The same reference numerals designate the same or like elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B, and C," "at least one of A, B, or C," "at least one selected from a group of A, B, and C," or "at least one selected from among A, B, and C" are used to designate a list of elements A, B, and C, the phrase may refer to any and all suitable combinations or a subset of A, B, and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It is to be understood that, although the terms "first," "second," "third," etc. may be used herein to describe various elements, components, regions, layers, and/or sections, these elements, components, regions, layers, and/or sections are not to be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It is to be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (e.g., rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It is to be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all sub-ranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

References to two compared elements, features, etc. as being "the same" may mean that they are the same or substantially the same. Thus, the phrase "the same" or "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

When an arbitrary element is referred to as being arranged (or located or positioned) on the "above (or below)" or "on (or under)" a component, it may mean that the arbitrary element is placed in contact with the upper (or lower) surface of the component and may also mean that another component may be interposed between the component and any arbitrary element arranged (or located or positioned) on (or under) the component.

In addition, it is to be understood that when an element is referred to as being "coupled," "linked," or "connected" to another element, the elements may be directly "coupled," "linked," or "connected" to each other, or one or more intervening elements may be present therebetween, through which the element may be "coupled," "linked," or "connected" to another element. In addition, when a part is referred to as being "electrically coupled" to another part, the part may be directly electrically connected to another part, or one or more intervening parts may be present therebetween such that the part and the another part are indirectly electrically connected to each other.

Throughout the specification, when "A and/or B" is stated, it means A, B, or A and B, unless otherwise stated. That is, "and/or" includes any or all combinations of a plurality of items enumerated. When "C to D" is stated, it means C or more and D or less, unless otherwise specified.

The terms used in the present specification are for describing embodiments of the present disclosure and are not intended to limit the present disclosure.

Herein, in describing the present disclosure with reference to some example embodiments, duplicate descriptions may be omitted for components that are the same as or correspond to each other across the embodiments. For example, when a component the same as or corresponding to a component disclosed in one embodiment is disclosed in another embodiment, the corresponding component may be omitted from the description of the another embodiment, and the description may focus on a component that is different from that in the one embodiment.

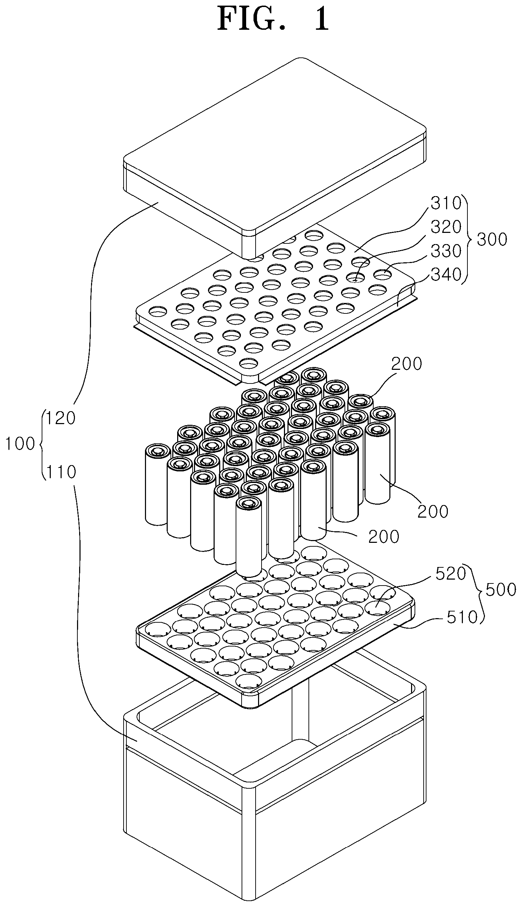

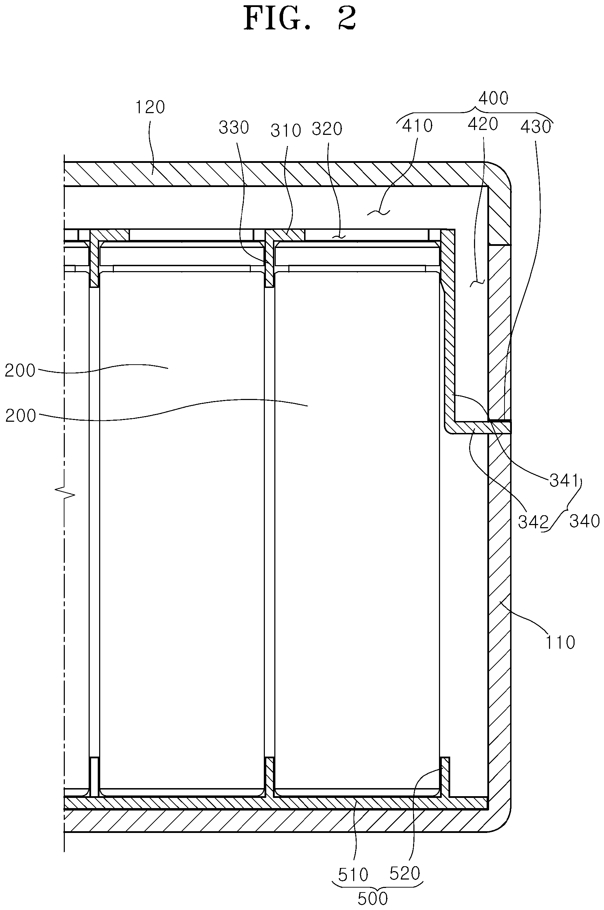

FIG. 1 is a perspective view schematically illustrating a configuration of a battery pack according to an embodiment of the present disclosure; and FIG. 2 is a cross-sectional view schematically illustrating a configuration of the battery pack according to the embodiment of FIG. 1.

Referring to FIGS. 1 and 2, a battery pack according to an embodiment includes a housing 100, a battery cell 200, a first holder 300, and a guide member, or guide, 400.

The housing 100 forms a schematic exterior of the battery pack and provides a space in which the battery cell 200 may be accommodated.

The housing 100 may include a housing body 110 and a cover 120.

The housing body 110 may be formed to have a box shape, with an empty interior and an open side. The open side of the housing body 110 may be disposed to face upward. However, a cross-sectional shape of the housing body 110 is not limited to a quadrangular box shape, as shown in FIG. 1, and may be varied in design to have any of various shapes, such as any of a polygonal shape, a circular shape, and an oval shape.

The cover 120 may be coupled to the housing body 110 and may close an internal space of the housing body 110. As an example, the cover 120 may be formed to have a generally plate shape and may be disposed to face the open side of the housing body 110, that is, an upper side of the housing body 110. The cover 120 may be fixed to the housing body 110 by any of various types of coupling methods, such as bolting, welding, or fitting. A thickness of the cover 120 may be formed to be equal to a thickness of the housing body 110.

The battery cell 200 may function as a unit structure, which stores and supplies power, in the battery pack.

Herein, a case in which the battery cell 200 is a lithium ion secondary battery and has a cylindrical shape will be described as an example. However, the present disclosure is not limited thereto, and the battery cell 200 may be a lithium polymer battery or a prismatic type battery, for example.

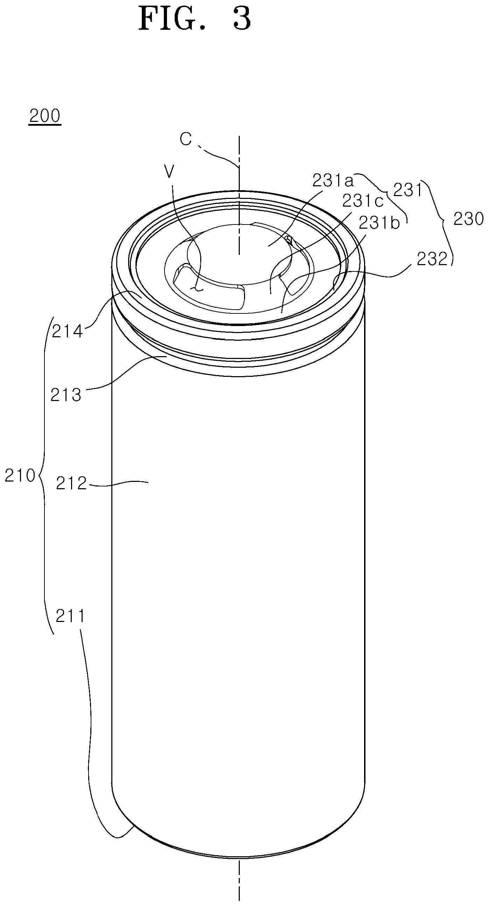

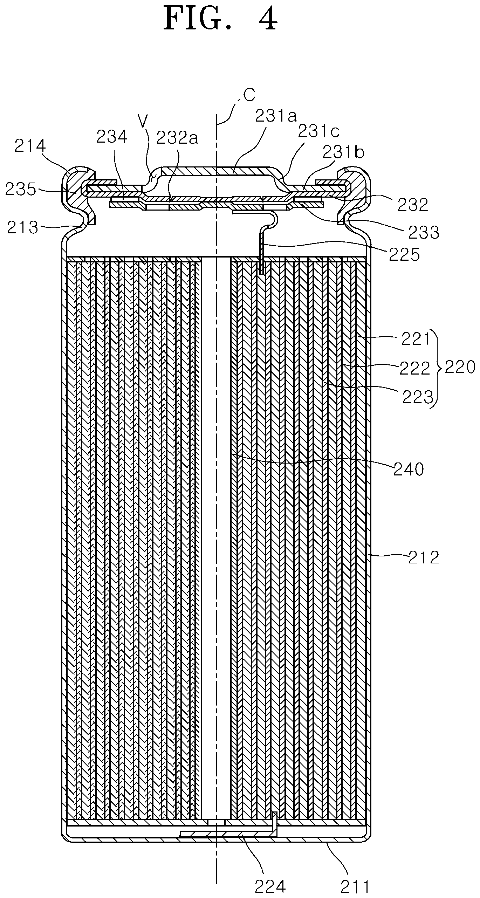

FIG. 3 is a perspective view schematically illustrating a configuration of the battery cell according to an embodiment of the present disclosure; and FIG. 4 is a cross-sectional view schematically illustrating a configuration of the battery cell of FIG. 3.

Referring to FIGS. 3 and 4, the battery cell 200 may include a cell case 210, an electrode assembly 220, and a cap assembly 230.

In an embodiment, the cell case 210 may include a bottom part 211 with a generally circular shape and a side wall part 212 extending by a certain length upward from the bottom part 211. In an embodiment, the cell case 210 may be made of steel, a steel alloy, nickel-plated steel, a nickel-plated steel alloy, aluminum, or an aluminum alloy.

During an assembly process of the battery cell 200, an upper portion of the cell case 210 may be open. In an embodiment, during the assembly process of the battery cell 200, the electrode assembly 220 may be integrated into one structure and inserted into the cell case 210. Thereafter, an electrolyte may be additionally injected into the cell case 210.

A beading part 213 recessed toward a central axis of the cap assembly 230 may be formed on an upper side of the cell case 210 to prevent or substantially prevent the cap assembly 230 from being separated to the outside. The beading part 213 may be disposed at a lower portion of the cap assembly 230. A crimping part 214 bent to surround an edge of the cap assembly 230 may be formed on an upper portion of the beading part 213.

The electrode assembly 220 may be accommodated inside the cell case 210. The electrode assembly 220 may include or be referred to as an electrode, an electrode group, or a jelly roll. The electrode assembly 220 may include a negative electrode plate 221 coated with a negative electrode active material (e.g., graphite, carbon, or the like), a positive electrode plate 222 coated with a positive electrode active material (e.g., a transition metal oxide (e.g., LiCoO₂, LiNiO₂, LiMn₂O₄, or the like)), and a separator 223 located between the negative electrode plate 221 and the positive electrode plate 222 to prevent or substantially prevent a short circuit and for example to allow only lithium ions to move. In an embodiment, the negative electrode plate 221, the positive electrode plate 222, and the separator 223 may be wound in a generally cylindrical shape. In one or more examples, the negative electrode plate 221 may be a copper (Cu) foil, the positive electrode plate 222 may be an aluminum (Al) foil, and the separator 223 may be polyethylene (PE) or polypropylene (PP).

In an embodiment, a negative electrode tab 224 may be welded to the negative electrode plate 221. The negative electrode tab 224 may protrude and extend downward by a certain length from the electrode assembly 220. In an embodiment, a positive electrode tab 225 may be welded to the positive electrode plate 222. The positive electrode tab 225 may protrude and extend upward by a certain length from the electrode assembly 220. In an embodiment, the negative electrode tab 224 may be made of copper (Cu) or nickel (Ni), and the positive electrode tab 225 may be made of aluminum (Al).

In an embodiment, the negative electrode tab 224 may be welded to the bottom part 211 of the cell case 210. Thus, the cell case 210 may function as a negative electrode. In one or more examples, the negative electrode tab 224 may be ultrasonically or laser welded to the bottom part 211 of the cell case 210. However, the positive electrode tab 225 may be welded to the bottom part 211 of the cell case 210, and, in this case, the cell case 210 may function as a positive electrode.

In an embodiment, the electrode assembly 220 may further include a center pin 240. In an embodiment, the center pin 240 may have a hollow circular pipe shape and may be coupled to the center or approximate center of the electrode assembly 220. The center pin 240 may be made of steel, stainless steel, aluminum, an aluminum alloy, or polybutylene terephthalate, but the material thereof is not limited thereto. The center pin 240 may suppress deformation of the electrode assembly 220 during charging and discharging of the secondary battery. The center pin 240 may function as a passage for a gas generated inside the secondary battery to move therethrough. However, in some embodiments, the center pin 240 may be omitted.

The cap assembly 230 may seal an opening of the cell case 210 to protect the electrode assembly 220 from an external environment. When an internal pressure of the cell case 210 is greater than a reference pressure due to a thermal runaway or ignition of the battery cell 200, the cap assembly 230 may be broken to release an internal gas of the cell case 210 to the outside. In some examples, the cap assembly 230 may function as a positive electrode terminal.

In an embodiment, the cap assembly 230 may include a cap-up 231, a vent plate 232, and a cap-down 233.

The cap-up 231 may function as a terminal electrically connected to an external device. In one or more embodiments, the cap-up 231 may function as a positive electrode terminal.

A vent hole V may be formed in the cap-up 231. The vent hole V may discharge an internal gas to the outside when an abnormal internal pressure is generated inside the cell case 210 due to overcharging or the like. In an embodiment, the cap-up 231 may be made of aluminum or an aluminum alloy.

As an example, the cap-up 231 may include an inner body 231a, an outer body 231b, and a bridge 231c.

The inner body 231a may form the exterior of a central portion of the cap-up 231. As an example, the inner body 231a may be formed to have a substantially disk shape. The inner body 231a may be disposed such that a central axis thereof aligns with a central axis C of the cell case 210.

The outer body 231b may form an exterior of an edge of the cap-up 231. As an example, the outer body 231b may be formed to have a substantially hollow ring shape. A diameter of the outer body 231b may be formed to be greater than a diameter of the inner body 231a. In an embodiment, the outer body 231b may be disposed coaxially with the inner body 231a. That is, a central axis of the outer body 231b may be disposed to be aligned with the inner body 231a and the central axis C of the cell case 210.

The inner body 231a and the outer body 231b may be disposed to be vertically spaced apart from each other. As an example, the outer body 231b may be disposed below the inner body 231a. However, the inner body 231a and the outer body 231b may be disposed in a same plane.

The bridge 231c is disposed between the inner body 231a and the outer body 231b, and may support the inner body 231a with respect to the outer body 231b. In an embodiment, the bridge 231c may be formed to have a bar shape with both end portions connected to an outer circumferential surface of the inner body 231a and an inner circumferential surface of the outer body 231b, respectively. In an embodiment, a plurality of bridges 231c may be provided. The plurality of bridges 231c may be arranged to be spaced apart from each other at an interval (e.g., a set interval) along a circumference around the central axis C of the cell case 210. In an embodiment, an interval between the adjacent bridges 231c may be the same.

The vent hole V may be formed to have the shape of a hole formed to pass through the cap-up 231. As an example, the vent hole V may be formed to have a shape of a hole passing through a region between the inner body 231a and the outer body 231b. In an embodiment, a plurality of vent holes V may be provided. Each of the plurality of vent holes V may be individually disposed between the adjacent bridges 231c. However, a number of the vent holes V is not limited to that shown in FIG. 3, and may be varied in design.

The vent plate 232 may be located below the cap-up 231. The vent plate 232 may be in close contact with, in contact with, coupled to, or connected to a lower portion of the cap-up 231. As an example, the vent plate 232 may be in close contact with, in contact with, coupled to, or connected to an edge of the cap-up 231, such as the outer body 231b, other than the center portion, such as the inner body 231a, that protrudes upward in the cap-up 231. In an embodiment, an end portion of the vent plate 232 may extend in a curved manner to surround an end portion of the outer body 231b. In an embodiment, the vent plate 232 may be made of aluminum or an aluminum alloy.

The vent plate 232 may include a notch 232a. In an embodiment, the notch 232a may be formed to be recessed to a certain depth from an outer side surface of the vent plate 232.

As an internal pressure of the battery cell 200 rises above a reference pressure (or a rupture pressure of the vent plate 232) due to a thermal runaway or ignition of the battery cell 200, the notch 232a may rupture, and emissions generated inside the cell case 210 may pass sequentially through the notch 232a and the vent hole V to be discharged to the outside. Here, the emissions discharged from the vent hole V may include at least one of flames, gases, and smoke.

The cap-down 233 may be disposed below the vent plate 232. The cap-down 233 may be in close contact with, in contact with, connected to, or coupled to the vent plate 232. The cap-down 233 may be electrically connected to the electrode assembly 220 through the positive electrode tab 225. The cap-down 233 may be electrically connected to the vent plate 232 and the cap-up 231. The positive electrode tab 225 of the electrode assembly 220 may be welded to a lower surface of the cap-down 233. In one or more examples, the lower surface of the cap-down 233 may be ultrasonic and/or laser welded to the positive electrode tab 225. In one or more examples, the cap-down 233 may be made of aluminum or an aluminum alloy.

In one or more embodiments, in the event of a thermal runaway or ignition of the battery cell 200, the vent plate 232 may be deformed by the internal pressure of the cell case 210, and the cap-down 233 and the vent plate 232 may be electrically separated from each other.

A first insulating member 234 may be installed between the vent plate 232 and the cap-down 233. The first insulating member 234 may be located between an edge of the vent plate 232 and an edge of the cap-down 233. The first insulating member 234 may insulate between the cap-down 233 and the vent plate 232 when the vent plate 232 is deformed by the internal gas. In one or more embodiments, the first insulating member 234 may be formed of a resin material, such as polyethylene (PE), polypropylene (PP), polyethylene terephthalate (PET), or the like, but a material thereof is not limited thereto.

A second insulating member 235 may be installed on the upper side of the cell case 210. The second insulating member 235 may be located between an end portion of the vent plate 232, which surrounds the outer body 231b of the cap-up 231, and the cell case 210. Both, or opposite, sides of the second insulating member 235 may be respectively in close contact with the end portion of the vent plate 232 and an inner side surface of each of the crimping part 214 and the beading part 213. The second insulating member 235 may insulate between the cell case 210 and the cap assembly 230. In an embodiment, the second insulating member 235 may be formed of a resin material, such as polyethylene (PE), polypropylene (PP), polyethylene terephthalate (PET), or the like, but a material thereof is not limited thereto.

The battery cell 200 may be disposed inside the housing 100. As an example, the battery cell 200 may be disposed in an internal space of the housing body 110. The battery cell 200 may be disposed such that the bottom part 211 faces a bottom surface of the housing body 110 and the vent hole V faces the cover 120. However, the battery cell 200 is not limited to thereto, and may be disposed such that the bottom part 211 faces the cover 120 and the vent hole V faces the bottom surface of the housing body 110.

A plurality of battery cells 200 may be provided. In an embodiment, the plurality of battery cells 200 may be disposed in parallel to each other in the housing 100. The plurality of battery cells 200 may be disposed in any of various patterns inside the housing 100, such as a grid shape or a zigzag shape. A number of the battery cells 200 may be varied in design depending on a size of the housing 100 or the like.

The first holder 300 may be disposed inside the housing 100 and may support the plurality of battery cells 200. The first holder 300 may function as a component that maintains an interval (e.g., a constant interval) between the plurality of battery cells 200.

The first holder 300 may include a first holder body 310, a transfer hole 320, a first alignment member 330, and a fixing member 340.

The first holder body 310 may be formed to have a shape of a plate that is seated on the battery cells 200. As an example, the first holder body 310 may be seated on an upper side surface of each of the battery cells 200, in which the vent hole V is formed.

The transfer hole 320 may pass through the first holder body 310 and may be disposed to face the vent hole V. The transfer hole 320 may function as a component that transfers the emissions discharged from the vent hole V to the guide member 400, which will be described below. The transfer hole 320 may have a shape of a hole that vertically passes through upper and lower portions of the first holder body 310. A cross-sectional area of the transfer hole 320 may be smaller than a cross-sectional area of the battery cell 200. A cross-sectional shape of the transfer hole 320 may be varied in design to have any of various suitable shapes other than the circular shape shown in FIG. 1.

A plurality of transfer holes 320 may be provided. The plurality of transfer holes 320 may be disposed to be spaced apart from each other in the first holder body 310. In an embodiment, the plurality of transfer holes 320 may be disposed to individually face the vent holes V of different battery cells 200 - for example, one for each battery cell.

The first alignment member 330 may extend from the first holder body 310 and may be inserted between the adjacent battery cells 200 - see FIG. 2. The first alignment member 330 may align an interval between the battery cells 200 to a certain size (e.g., a set size). The first alignment member 330 may extend vertically downward from a lower side surface of the first holder body 310. Both, or opposite, side surfaces of the first alignment member 330 may be disposed to respectively surround upper circumferential surfaces of a pair of adjacent battery cells 200. A plurality of first alignment members 330 may be provided. Each of the plurality of first alignment members 330 may be inserted individually between the pair of adjacent battery cells 200.

The fixing member 340 may extend from the first holder body 310 and may be fixed to the housing 100. That is, the fixing member 340 may fix a position of the first holder 300 inside the housing 100.

The fixing member 340 may be disposed at an end portion of the first holder body 310. Accordingly, the fixing member 340 may prevent or substantially prevent the battery cell 200 from interfering with the guide member 400 to be described below. A plurality of fixing members 340 may be provided. In an embodiment, the plurality of fixing members 340 may be individually disposed on different circumference surfaces of the first holder body 310.

The fixing member 340 may include a first fixing member 341 and a second fixing member 342.

The first fixing member 341 may form an exterior of a side of the fixing member 340 and may be connected to the first holder body 310. As an example, the first fixing member 341 may extend in a first direction from an end portion of the first holder body 310. Here, the first direction may refer to a longitudinal direction of the battery cell 200, i.e., a direction parallel to a vertical direction. An inner side surface of the first fixing member 341 may be disposed around (e.g., to surround) the side wall part 212 of the battery cell 200 disposed in an outermost region of the plurality of battery cells 200. Accordingly, the first fixing member 341 can protect the battery cell 200 from emissions, such as flames, gases, smoke, and the like, flowing through the guide member 400 if the battery cell 200 ignites.

The second fixing member 342 may form an exterior of another side of the fixing member 340, and may be connected to the housing 100. As an example, the second fixing member 342 may extend in a second direction from an end portion of the first fixing member 341. Here, the second direction may refer to a direction that intersects the first direction and is parallel to a width direction of the battery cell 200. An end portion of the second fixing member 342 may horizontally pass through a side surface of the housing body 110. Accordingly, the second fixing member 342 may support (e.g., entirely support) the first holder 300 in the housing 100.

The end portion of the second fixing member 342 may be exposed to the outside of the housing 100. As an example, the end portion of the second fixing member 342 may be disposed to directly face an external space of the housing body 110 by passing (e.g., completely passing) through the side surface of the housing body 110. In an embodiment, an end surface of the second fixing member 342 may be coplanar with an outer side surface of the housing body 110, and may also protrude outward from the housing body 110.

A length of the second fixing member 342 may be less than a length of the first fixing member 341. Accordingly, the second fixing member 342 may increase a length of the first fixing member 341 relatively to improve protection performance of the battery cell 200 provided by the first fixing member 341.

The guide member 400 may be disposed between the housing 100 and the first holder 300. The guide member 400 may guide a flow of emissions discharged from the vent hole V in the housing 100 if the battery cell 200 ignites. For example, the guide member may be a passageway for the flow of the emissions. Accordingly, the guide member 400 can prevent or substantially prevent chain ignition of the plurality of battery cells 200, which may occur when emissions discharged from the vent hole V flow randomly.

In an embodiment, the guide member 400 may include a first channel 410, a second channel 420, and a third channel 430.

The first channel 410 may be disposed between the housing 100 and the first holder body 310. As an example, the first channel 410 may refer to an empty space disposed between a lower surface of the cover 120 and an upper surface of the first holder body 310. A lower surface of the first channel 410 may be connected to the plurality of transfer holes 320. Accordingly, if the battery cell 200 ignites, emissions discharged from the vent hole V may flow into the first channel 410 through the transfer hole 320. A longitudinal direction of the first channel 410 may be disposed parallel to the second direction, that is, the width direction of the battery cell 200.

The second channel 420 may be disposed between the housing 100 and the first fixing member 341. As an example, the second channel 420 may refer to an empty space disposed between an inner side surface of the housing body 110 and an outer side surface of the first fixing member 341. An end portion of the second channel 420 may be connected to an end portion of the first channel 410. Accordingly, the emissions flowing into the first channel 410 may flow into the second channel 420 through the end portion of the first channel 410.

The second channel 420 may be disposed such that a longitudinal direction thereof intersects with that of the first channel 410. As an example, the longitudinal direction of the second channel 420 may be disposed parallel to the first direction, that is, the longitudinal direction of the battery cell 200. Accordingly, the second channel 420 may change a flow direction of the emissions received from the first channel 410, thereby reducing a flow velocity of the emissions.

The third channel 430 may be disposed between the housing 100 and the second fixing member 342.

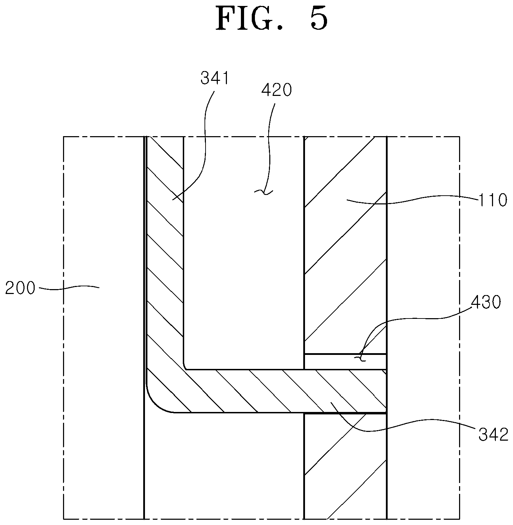

FIG. 5 is an enlarged view schematically illustrating a configuration of the third channel of the battery pack of FIG. 1.

Referring to FIG. 5, the third channel 430 may refer to a gap formed between the second fixing member 342 and the housing body 110 as the second fixing member 342 passes through the housing body 110. A first end portion of the third channel 430 may be connected to another end portion of the second channel 420. A second end portion of the third channel 430 may be connected to the external space of the housing 100. Thus, the emissions flowing along the second channel 420 may flow into the third channel 430 through the first end portion of the third channel 430, and may be discharged to the external space of the housing 100 through the second end portion of the third channel 430. Accordingly, the third channel 430 can prevent or substantially prevent chain ignition of the battery cells 200 by discharging emissions generated due to ignition of any one battery cell 200 to the outside of the housing 100.

The third channel 430 may be disposed such that a longitudinal direction thereof intersects with that of the second channel 420. As an example, the longitudinal direction of the third channel 430 may be disposed parallel to the second direction.

The battery pack according to an embodiment may further include a second holder 500.

The second holder 500 is spaced apart from the first holder 300, and may support the plurality of battery cells 200 together with the first holder 300 inside the housing 100.

The second holder 500 may include a second holder body 510 and a second alignment member 520.

The second holder body 510 may be formed to have a shape of a plate that is seated on the battery cell 200. As an example, the second holder body 510 may be disposed between the bottom surface of the housing body 110 and the bottom part 211 of the battery cell 200. Upper and lower surfaces of the second holder body 510 may be seated on the bottom part 211 of the battery cell 200 and the bottom surface of the housing body 110, respectively.

The second alignment member 520 may extend from the second holder body 510 and may be inserted between the adjacent battery cells 200. The second alignment member 520 may, in conjunction with the first alignment member 330, align the gap between the battery cells 200 to a certain size (e.g., a set size). The second alignment member 520 may extend vertically upward from an upper side surface of the second holder body 510. Both, or opposite, side surfaces of the second alignment member 520 may be disposed around (e.g., to respectively surround) lower circumference surfaces of the pair of adjacent battery cells 200. A plurality of second alignment members 520 may be provided. In an embodiment, each of the plurality of second alignment members 520 may be individually inserted between the pair of adjacent battery cells 200.

Herein, an operation of the battery pack according to the present embodiment will be described.

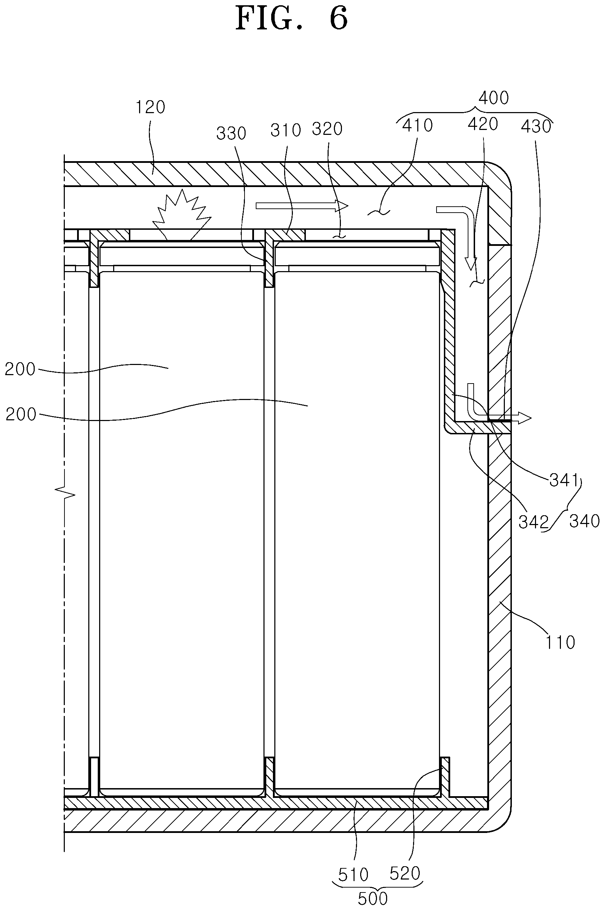

FIG. 6 is a view schematically illustrating an operation state of the battery pack of FIG. 1.

Referring to FIG. 6, in an event of a thermal runaway or ignition of the battery cell 200, emissions, such as flames, gases, smoke, and the like, discharged from the vent hole V of the battery cell 200 flow into the first channel 410 through the transfer hole 320.

Thereafter, the emissions flowing into the first channel 410 sequentially pass through the first channel 410 and the second channel 420 to be transferred to the third channel 430.

In this process, since the second channel 420 is disposed to intersect the first channel 410 and the third channel 430, a flow direction of the emissions may be repeatedly changed, and a flow velocity of the emissions may be gradually reduced.

The emissions flowing into the third channel 430 may be discharged to the outside of the housing 100 through the end portion of the third channel 430, and the emissions may be removed from the internal space of the housing 100.

Herein, a battery pack according to another embodiment of the present disclosure will be described.

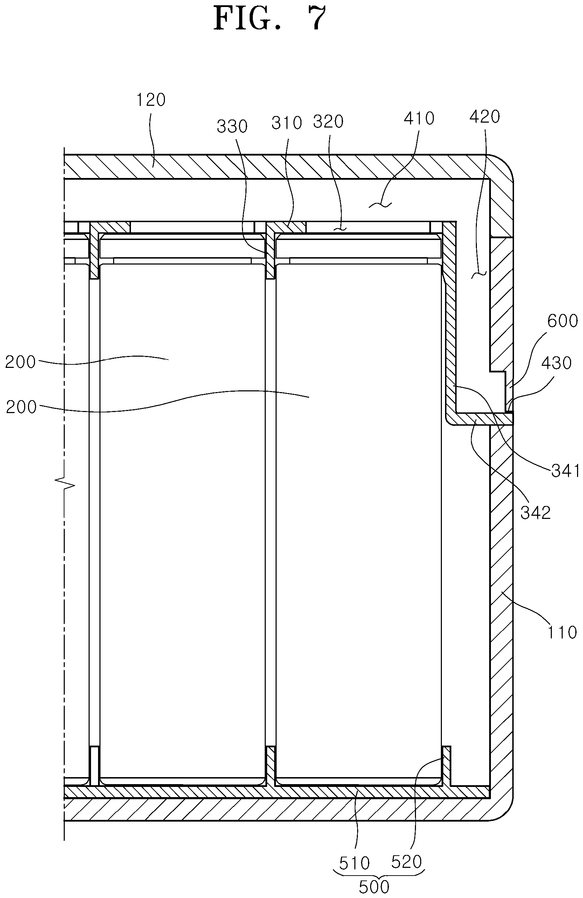

FIG. 7 is a view schematically illustrating a configuration of a battery pack according to another embodiment of the present disclosure.

Referring to FIG. 7, the battery pack according to the present embodiment may be configured to further include a housing vent 600 in the battery pack according to the embodiment of FIG. 1.

The housing vent 600 is provided in the housing 100 and may rupture in response to an increase in pressure or temperature of the guide member 400. That is, the housing vent 600 provides a path through which emissions are discharged to the outside of the housing 100 separately from the third channel 430 when the pressure or temperature of the guide member 400 excessively rises.

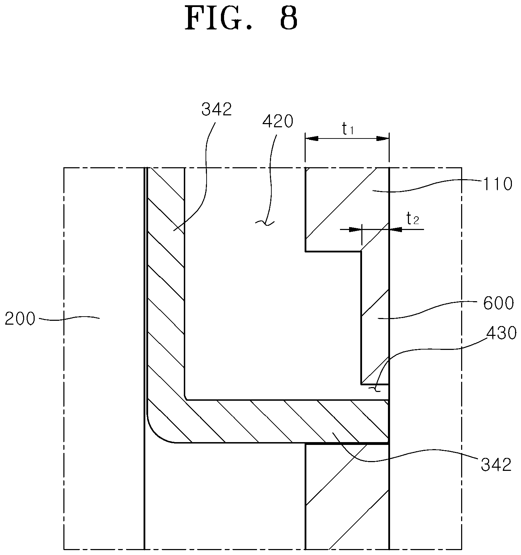

FIG. 8 is an enlarged view schematically illustrating a configuration of the housing vent according to the present embodiment of the present disclosure.

Referring to FIG. 8, the housing vent 600 may be, in an embodiment, a portion of a side surface region of the housing body 110 facing the second channel 420. In another embodiment, the housing vent 600 may be manufactured as a separate component from the housing body 110 and then coupled to the housing body 110.

A thickness t₂ of the housing vent 600 may be less than a thickness t₁ of the housing 100 and, more specifically, the housing body 110. As an example, a ratio t₂/t₁ of the thickness t₂ of the housing vent 600 to the thickness t₁ of the housing 100 may be greater than or equal to 0.3 and less than or equal to 0.5. That is, the thickness t₂ of the housing vent 600 (i.e. its wall thickness t₂) may have a size of 30% to 50% of the thickness t₁ of the housing 100 (i.e. the housing's wall thickness t₁).

The housing vent 600 may rupture in response to an increase in pressure or temperature of the second channel 420. That is, the housing vent 600 may rupture due to a difference in pressure between the second channel 420 and the outside of the housing 100 when the pressure of the second channel 420 rises above a certain pressure, (e.g., a set pressure), or the housing vent 600 may melt when the temperature in the second channel 420 rises above a certain pressure, (e.g., a set pressure). Accordingly, when the pressure or temperature in the second channel 420 rises excessively, the housing vent 600 may expand a path through which emissions are discharged to the outside of the housing 100, separately from the third channel 430.

The housing vent 600 may be disposed to face the second fixing member 342 with the third channel 430 interposed therebetween. That is, the housing vent 600 may be disposed at a position at which an end portion (or side) thereof is in direct contact with the third channel 430. In this case, when the housing vent 600 ruptures, a discharge path for the emissions, which is formed by the housing vent 600, may be connected to the third channel 430. Accordingly, even when the housing vent 600 ruptures, the emissions flowing through the second channel 420 may be transferred to the point at which the third channel 430 is located, ensuring that the discharge performance of the third channel 430 is not lost.

Herein, an operation of the battery pack according to the present embodiment will be described.

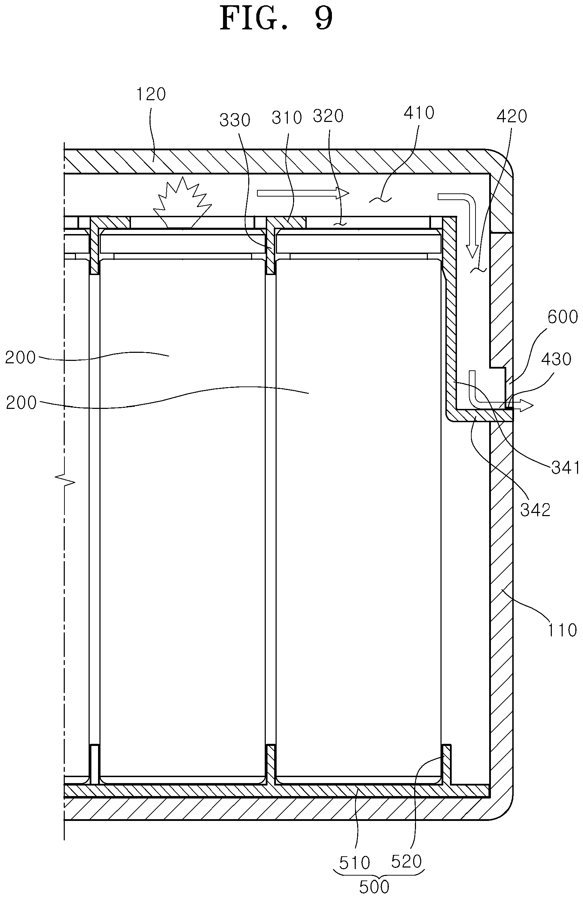

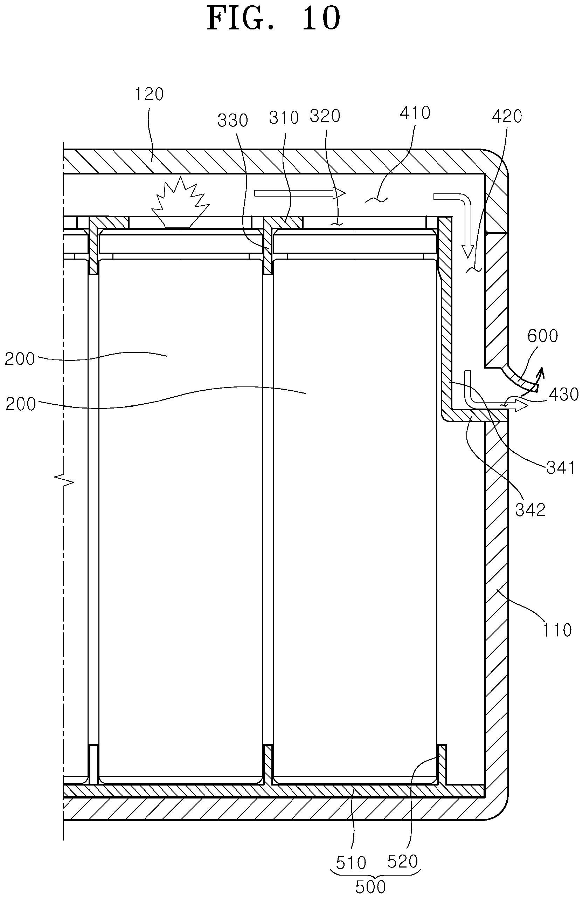

FIGS. 9 and 10 are views schematically illustrating the operation of the battery pack of FIG. 7.

In the event of a thermal runaway or ignition of the battery cell 200, emissions such as flames, gases, smoke, and the like discharged from the vent hole V of the battery cell 200 flow into the first channel 410 through the transfer hole 320.

Thereafter, the emissions flowing into the first channel 410 sequentially pass through the first channel 410 and the second channel 420 to be transferred to the third channel 430.

The emissions flowing into the third channel 430 may be discharged to the outside of the housing 100 through the end portion of the third channel 430, and the emissions may be removed from the internal space of the housing 100.

If a flow rate of the emissions discharged from the vent hole V exceeds a flow rate of the emissions discharged from the third channel 430, an internal pressure or temperature of the guide member 400, more specifically, the second channel 420, may continuously rise.

As the internal pressure of the second channel 420 rises above a rupture pressure of the housing vent 600, or the internal temperature of the second channel 420 rises above a melting temperature of the housing vent 600, the housing vent 600 may rupture and expand an open area of the third channel 430.

Accordingly, the flow rate of the emissions discharged to the outside of the housing 100 increases, and the internal pressure or temperature of the guide member 400 may be maintained below a set size.

Herein, a battery pack according to another embodiment of the present disclosure will be described.

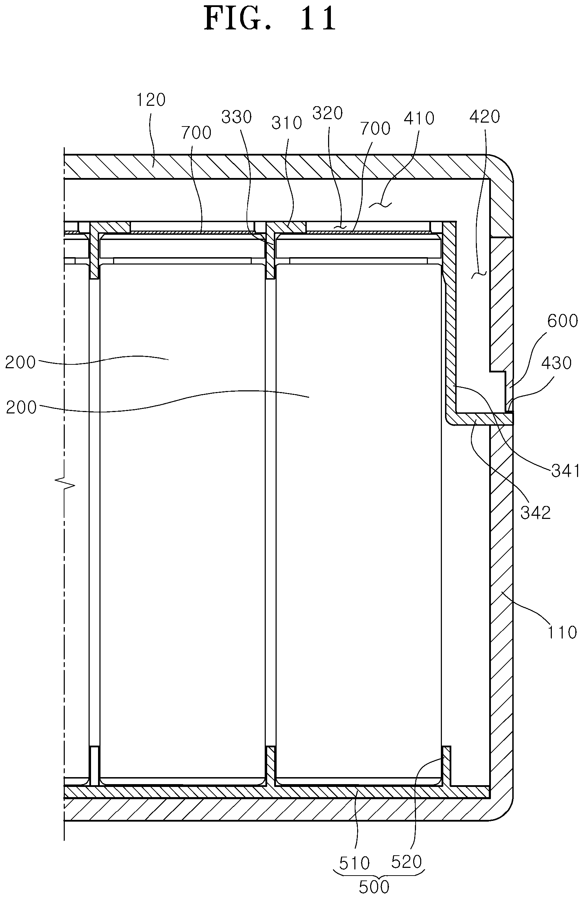

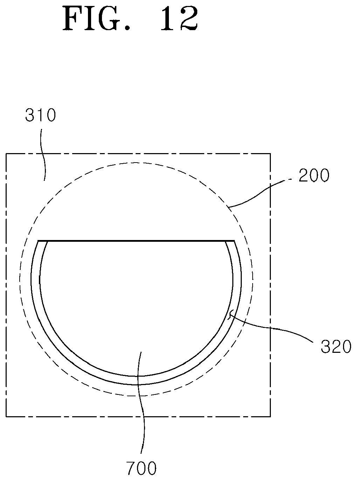

FIG. 11 is a view schematically illustrating a configuration of the battery pack according to another embodiment of the present disclosure; and FIG. 12 is a plan view schematically illustrating a configuration of a blocking member of the battery pack of FIG. 11.

Referring to FIGS. 11 and 12, the battery pack according to the present embodiment may be configured to further include a blocking member 700 in the battery packs according to the previously described embodiments of the present disclosure.

In FIG. 11, a case in which the battery pack according to the present embodiment includes the housing vent 600 is illustrated as an example, but the battery pack according to the present embodiment may also be configured not to include the housing vent 600.

The blocking member 700 may be disposed on the vent hole V of the battery cell 200. A plurality of blocking members 700 may be provided, and, in an embodiment, the plurality of blocking members 700 may be individually disposed on the vent holes V of different battery cells 200.

The blocking member 700 may close the vent hole V during normal operation of the battery cell 200. Accordingly, the blocking member 700 may block emissions discharged from the battery cell 200 if one of the battery cells 200 ignites from flowing into the vent hole V of the adjacent battery cell 200.

The blocking member 700 may include a material that is insulating, heat-resistant, or fire-resistant. For example, the blocking member 700 may include at least one of silicone, polystyrene, polyurethane, polyethylene, vinyl chloride, a ceramic material, and the like.

In an embodiment, the blocking member 700 may be manufactured in the form of a sheet and then attached to the cap assembly 230 of the battery cell 200. In an embodiment, the blocking member 700 may be applied in a liquid state on the cap assembly 230 of the battery cell 200 and then cured.

When the battery cell 200 ignites, the blocking member 700 may be separated from the battery cell 200 by the pressure of the emissions discharged from the vent hole V, thereby opening the vent hole V. An area of the blocking member 700 may be formed to be smaller than an area of the transfer hole 320. Accordingly, the blocking member 700 may be easily separated from the battery cell 200 through the transfer hole 320 if the battery cell 200 ignites.

Herein, an operation of the battery pack according to the present embodiment will be described.

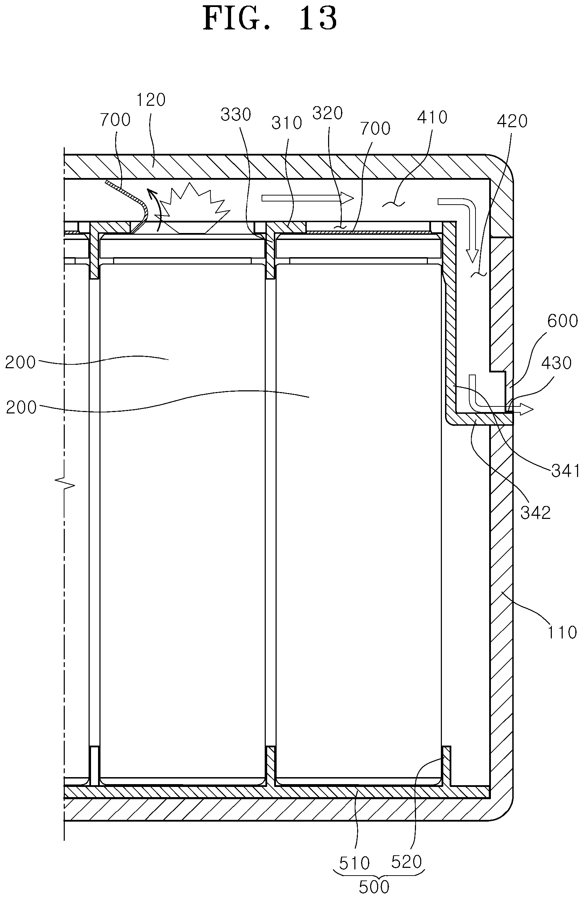

FIG. 13 is a view schematically illustrating an operation state of the battery pack of FIG. 11.

Referring to FIG. 13, in the event of a thermal runaway or ignition of one battery cell 200, the blocking member 700 disposed on a corresponding battery cell 200 may be separated from the battery cell 200 by the pressure of the emissions, such as flames, gases, smoke, and the like, discharged from the vent hole V.

As the area of the blocking member 700 is formed to be smaller than the area of the transfer hole 320, the blocking member 700 may be displaced outwardly from the transfer hole 320 and may open the vent hole V.

As the vent hole V opens, the emissions discharged from the vent hole V flow into the first channel 410 through the transfer hole 320.

In an embodiment, the blocking members 700, which are disposed on the unignited battery cells 200, keep the vent holes V closed while emissions flow through the first channel 410, and the emissions flowing through the first channel 410 may not flow into the vent holes V of the unignited battery cells 200.

Thereafter, the emissions flowing into the first channel 410 sequentially pass through the first channel 410 and the second channel 420 to be transferred to the third channel 430.

The emissions flowing into the third channel 430 may be discharged to the outside of the housing 100 through the end portion of the third channel 430, and the emissions may be removed from the internal space of the housing 100.

According to embodiments of the present disclosure, by discharging flames, gases, smoke, and the like generated when a battery cell ignites to the outside of a housing through a gap in an assembly structure of the housing and a first holder, it is possible to prevent or substantially prevent flames, gases, smoke, and the like discharged from any one of the battery cells from spreading to adjacent battery cells and prevent or substantially prevent chain ignition of the battery cells.

According to embodiments of the present disclosure, a housing vent can prevent or substantially prevent damage to a housing, battery cells, and the like caused by excessive pressure or temperature rise inside the housing.

According to embodiments of the present disclosure, a blocking member can block emissions generated when one battery cell ignites from flowing into adjacent battery cells, thereby more effectively preventing chain ignition of the battery cells.

However, aspects and effects obtainable through the present disclosure are not limited to the above aspects and effects, and other technical aspects and effects that are not mentioned will be clearly understood by those skilled in the art from the following description of the present disclosure.

While the present disclosure has been described with reference to some example embodiments shown in the drawings, these embodiments are merely illustrative and it is to be understood that various modifications and equivalent other embodiments can be derived by those skilled in the art on the basis of the embodiments and the claims appended hereto.

## Claims

1. A battery pack comprising:
a housing;
a plurality of battery cells in the housing and each comprising a vent hole;
a first holder in the housing and configured to support the battery cells; and
a guide between the housing and the first holder and configured to guide a flow of an emission discharged from the vent hole.

2. The battery pack as claimed in claim 1, wherein the first holder comprises:
a first holder body seated on the battery cells;
a transfer hole passing through the first holder body and facing the vent hole;
a first alignment member extending from the first holder body and inserted between adjacent battery cells of the plurality of battery cells; and
a fixing member extending from the first holder body and fixed to the housing.

3. The battery pack as claimed in claim 2, wherein the fixing member is on an end portion of the first holder body.

4. The battery pack as claimed in claim 2 or claim 3, wherein the fixing member comprises:
a first fixing member connected to the first holder body and extending in a first direction; and
a second fixing member extending from the first fixing member in a direction intersecting the first direction and passing through the housing.

5. The battery pack as claimed in claim 4, wherein the first direction is parallel to a longitudinal direction of a battery cell of the plurality of battery cells.

6. The battery pack as claimed in claim 4 or claim 5, wherein an end portion of the second fixing member is exposed to an outside of the housing.

7. The battery pack as claimed in any one of claims 4 to 6, wherein a length of the second fixing member is less than a length of the first fixing member.

8. The battery pack as claimed in any one of claims 4 to 7, wherein the guide comprises:
a first channel connected to the transfer hole and located between the housing and the first holder body;
a second channel connected to the first channel and located between the housing and the first fixing member; and
a third channel connected to the second channel and located between the housing and the second fixing member.

9. The battery pack as claimed in claim 8, wherein the second channel intersects the first channel.

10. The battery pack as claimed in claim 8 or claim 9, wherein an end portion of the third channel is connected to an external space of the housing.

11. The battery pack as claimed in any one of claims 8 to 10, further comprising a housing vent in the housing and configured to rupture in response to an increase in pressure or temperature of the guide.

12. The battery pack as claimed in claim 11, wherein a thickness of the housing vent is less than a thickness of the housing.

13. The battery pack as claimed in claim 11 or claim 12, wherein a ratio of the thickness of the housing vent to the thickness of the housing is greater than or equal to 0.3 and less than or equal to 0.5.

14. The battery pack as claimed in any one of claims 2 to 13, further comprising a blocking member on a battery cell of the plurality of battery cells and configured to close the vent hole.

15. The battery pack as claimed in any one of the preceding claims, further comprising a second holder spaced apart from the first holder and configured to support the battery cells.
